# EUROPEAN PATENT APPLICATION

(11) **EP 2 123 163 A1**
(43) Date of publication of application: **25.11.2009**
(21) Application number: 08156398.3
(22) Date of filing: 16.05.2008
(51) Int. Cl.: A21D 13/00, A21D 8/04

(54) **Method and composition to improve short bite of bakery products.**

(71) Applicant: PURATOS N.V., 1702 Groot-Bijgaarden (BE)
(72) Inventor: Van Winckel, Bruno, 9000 Gent (BE); Verte, Fabienne, 9070 Destelbergen (BE)
(74) Representative: pronovem

(57) **Abstract**

The present invention relates to a method for the improvement of the short bite and texture parameters of bakery products by adding thereto at least one intermediate thermostable or thermostable serine or metallo- protease.

## Description

### Field of the Invention

The present invention relates to improving the short bite and texture parameters of bakery products.

### Background of the Invention

The consumers prefer to buy fresh bread and they want it to remain fresh for a long time. Consumers also prefer to buy breads with the lowest possible (labelled) additives.

Bread-improving and/or dough improving additives are in the bread making process added to the dough in order to improve texture, volume, flavour and freshness of the bread as well as to improve machinability and stability of the dough.

### State of the art

Emulsifiers serve to improve dough extensibility and may also be of some value for the consistency of the resulting bread.

Patent EP0776604 describes the use of unsaturated monoglycerides to produce microwavable crispy bread-roll having short bite. However, no quantification of short bite is given in said document.

One of the disadvantages of such products is that, in Europe, the addition of emulsifiers and other additives such as monoglycerides requires specific labelling of the bakery products with a E-number. Contrary to monoglycerides and/or emulsifiers, the addition of protease in bread does not require such specific labelling.

Proteases may be added in low amount by comparison to additives, preserving taste and other organoleptic properties of the bread.

Proteases have a long history of use in the baking sector. They are mostly used by the baker to reduce mechanical dough development requirements of unusually strong or tough gluten. They reduce the consistency of the dough, decreasing the farinograph value. They lower the viscosity and increase the extensibility of the dough. In the end product they improve the loaf volume and the bread colour. Also the flavour can be enhanced by production of certain peptides. The proteases mellow the gluten enzymatically rather than mechanically. After baking, proteases are thought to be inactivated.

The proteases most used in baking are from *Aspergillus oryzae* and *Bacillus subtilis.* The neutral bacterial proteases are by far more active on gluten than the alkaline proteases. Papain, bromelain and ficin are thiol(cystein)-proteases extracted from papaya, pineapple and figs. Especially papain is very reactive towards gluten proteins. Bacterial proteases and papain, especially neutral proteases, are used in cookies, breadsticks and crackers where a pronounced slackening of the dough is desired. However, in bread-making, a milder hydrolysis by fungal proteases is preferred. Patent EP-B-1496748 discloses the use of intermediate thermostable or thermostable proteases for the prevention or retarding of staling during the baking process of bakery products. This effect is especially noticeable in combination with other anti-staling enzymes (like thermostable amylases from *Bacillus licheniformis* or *Bacillus stearothermophilus* and thermo-stable maltogenic amylases).

Proteases have also some disadvantages when used in baking. The action of the proteases is not limited in time as it may continue after mixing. This may cause an increased risk of weakening the dough and increasing the stickiness of the dough. Sometimes their action is even enhanced by the pH drop during fermentation.

The use of proteases in baking requires strict control of the bulk fermentation and the proofing conditions of the dough. The proteases are inactivated during baking (Kruger, J.E. (1987) Enzymes and their role in cereal technology AACC 290-304). Especially neutral *Bacillus* proteases and papain should be dosed very carefully as overdoses slacken the dough too much. This may result in dough collapse before ovening or a lower bread volume and a more open crumb structure. In Europe, where the flours are weaker than in the US or Canada, the risk of overdosing protease is particularly present.

Furthermore, proteases also increase stickiness of the dough because the hydrolytic action causes water release from the gluten (Schwimmer, S. (1981) Source book of food enzymology - AVI Publishing, 583-584). This means that in practice proteases are not much used in bread-making in Europe.

Fungal proteases are sensitive to high temperatures. Some bacterial neutral and alkaline proteases are resistant to higher heat treatments. Neutral thermostable proteases from *Bacillus,* which may be tolerant to oxidizing agents, are preferred in detergent formulations. Also alkaline thermo-stable proteases from *Bacillus* are used in washing and detergent formulations.

Papain is very heat stable and requires a prolonged heating at 90 - 100°C for deactivation. Bromelain is less stable and is deactivated at around 70°C. Other heat stable proteases are produced by *Bacillus licheniformis* NS70 (Chemical Abstracts, 127, 4144 CA), *Bacillus licheniformis* MIR 29 (Chemical Abstracts, 116, 146805 CA), *Bacillus stearothermophilus* (Chemical Abstracts, 124, 224587 CA), *Nocardiopsis* (Chemical Abstracts, 114, 162444 CA) and *Thermobacteroides* (Chemical Abstracts, 116, 146805 CA). This is not an exhaustive list, but it illustrates the importance of the thermostable proteases and their application, mostly in detergents.

### Aims of the invention

The present invention provides a method for improving short bite properties of a bakery product without the disadvantages of above-mentioned proteases. For instance, proteases that have temperature optimum close to room temperature give weakening of the gluten during kneading and rising of the dough and/or changes in the properties of the dough rheology.

The invention is also related to an improver for the short bite of bakery products.

### Summary of the invention

The invention relates to a method for the improvement of the short bite of bakery products, which comprises the step of adding at least one intermediate-thermostable or thermostable serine or metallo- protease in said bakery product.

According to the invention, texture parameters consisting in the force (g) and the total work (g.sec) needed to break an identical sample of bakery product may also be measured, for instance by a texture analyser device, used to break said bakery product.

Advantageously, both texture parameters are measured simultaneously by a texture analyser as classically used for measuring the texture of bread, such as for instance an analyser TA-XT2™.

In the method of the invention, the force (g) and the total work (g.sec) are preferably both improved by at least about 10% vis-à-vis an identical sample but not containing at least one intermediate thermostable or thermostable serine or metallo-protease.

The invention also relates to a method wherein the short bite per sample of bakery product is estimated by taste panel of people.

Advantageously, in the method of the invention, thermostable and/or intermediate thermostable protease has a temperature activity optimum higher than 60°C, preferably higher than 70°C, more preferably higher than 80°C.

Preferably, the ratio between the protease activity at optimum temperature and the protease activity at 25°C is higher than 10, preferably higher than 15.

Advantageously, the proteases according to the invention show no adverse effect on dough rheology, on the crumb structure and on the volume of the resulting bakery product.

In the method of the invention, the proteases are preferably obtained by extraction from naturally-occurring eukaryotic or prokaryotic organisms, by synthesis or by genetic engineering.

Preferably, the protease is a neutral or an alkaline protease.

The protease may be a Taq protease, preferably isolated from *Thermus aquaticus LMG8924,* preferably aqualysin I, thermitase, isolated from *Thermoactinomyces vulgaris,* thermolysin, isolated from *Bacillus thermoproteolyticus* or subtilisin, isolated from *Bacillus licheniformis.*

The invention may be applied to soft bakery products such as bread, soft rolls, donuts, buns, microwavable buns, Danish pastry, hamburger rolls, pizza and pita bread and cake.

Proteases are preferably added to the flour at 5000 to 7500 units / 100 kg of flour of Thermitase, at 0.35 to 0.7 units/ 100 kg of flour of Thermolysin, at 0.35 to 0.7 units / 100 kg of flour of Subtilisin, or at 230 to 10400 units / 100 kg of flour of Taq protease, preferably at 350 to 700 units / 100 kg of flour of Taq protease.

The invention may be applied to crusty products such as baguettes and rolls.

Taq protease is preferably added to the flour of crusty products at 1300 to 10400 units / 100 kg of flour of Taq protease.

Another aspect of the invention is an improver for improving the mouthfeel, particularly the short bite of soft bakery products containing 230 to 1600 units / 100 kg of flour of Taq protease, more preferably at 350 to 700 units / 100 kg of flour of Taq protease, preferably isolated from *Thermus aquaticus* LMG8924, preferably aqualysin I, or 5000 to 7500 units / 100 kg of flour of Thermitase, isolated from *Thermoactinomyces vulgaris* or 0.35 to 0.7 units / 100 kg of flour of Thermolysin, isolated from *Bacillus thermoproteolyticus* or 0.35 to 0.7 units / 100 kg of flour of Subtilisin, isolated from *Bacillus licheniformis.*

The improver for improving the mouthfeel, particularly the short bite, for crusty products may contain 1300 to 10400 units / 100 kg of flour of Taq protease.

Another aspect is the possible addition to the protease of the invention of one or more enzyme(s) like amylase, xylanase, lipase, glucose oxidase, lipoxygenase, peroxidase and carbohydrate oxidase.

To the protease of the invention, one or more baking ingredients like oxidants (vitamin C or azodicarbonamide), emulsifiers (mono- or di-glycerides, diacetyl tartrate esters of monoglycerides, sodium stearoyl lactylates) sugar esters of fatty acids, lecithin; sugar and/or salt, fat and / or oil may be added.

### Short description of the figures

Fig. 1 illustrates TA-XT2^{™} texture analyzer (Stable Micro Systems UK). Fig. 1a is a typical graph showing the force applied by the analyzer on a sample of bakery product in function of the time; Fig. 1b shows the device and its action in breaking a bread.

Fig. 2 shows the relative activity of several proteases in function of the temperature. Fig. 2a: Taq protease, Fig. 2b, Subtilisin, Fig. 2c, Thermitase.

### Detailed description of the invention

The soft products of the invention present a soft crust, including amongst others all packed bakery goods and sweet goods (packed or unpacked). Their shelf-life may vary from 2 days to several months. Their fat and sugar content varies from 0% to over 30% each. Non-limiting examples of soft products are bread, soft rolls, donuts, buns, microwavable buns, Danish pastry, hamburger rolls, pizza and pita bread and cake.

Crusty products have a crusty crust. Both their fat and sugar content is lower than 2%. They are usually unpacked or wrapped with paper packaging. Their shelf-life is about 2 days in maximum. Non-limiting examples of crusty products are baguettes and rolls.

Consumers' choices are dictated by organoleptic properties, which encompass features such as mouthfeel and toughness.

Mouthfeel can influence the consumers' perception of freshness and is strongly related to parameters like moistness, melting and short bite.

The sensation of moistness is strongly correlated to the freshness and the staling of the crumb. However excessive moistness results in stickiness.

Melting reflects the time and the easiness a bolus of bread can be swallowed. Melting is improved by sufficient initial moistness, followed by a short bite and absence of bal-forming upon chewing.

Short bite, also sometimes referred to as opposite to chewiness and / or to toughness, is used to designate the force and total work needed to break a sample of bakery product and/or the number of chews needed to masticate a similar sample until a consistency that makes it ready to swallow. Short bite can be easily measured by trained taste panels of people and can be reasonably quantified using an arbitrary short bite scale. Such techniques are well known in the food industry and are generally referred to as organoleptic testing.

An initial training session is organized to familiarize the panelists with the range of products that will be tested. In this session reference standards are presented to train the panelists to recognize the differences between the product attributes that are to be measured.

Short bite estimated by trained taste panels of people can be compared with values measured by a texture analyser.

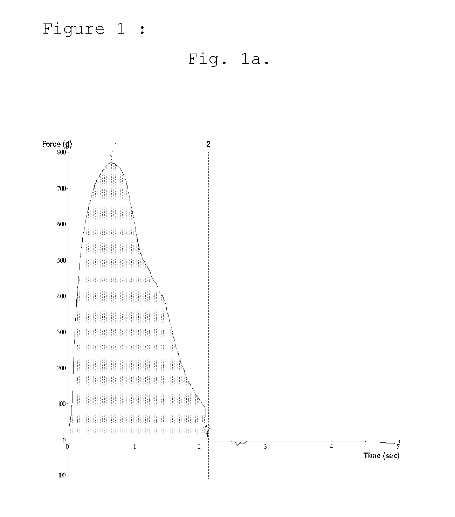

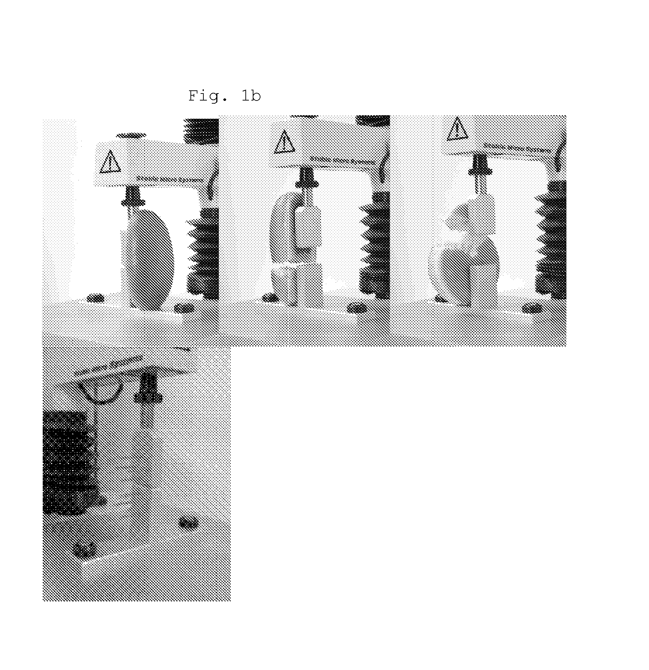

A preferred texture analyser is TA-XT2^{™} (Stable Micro Systems UK; Fig. 1).

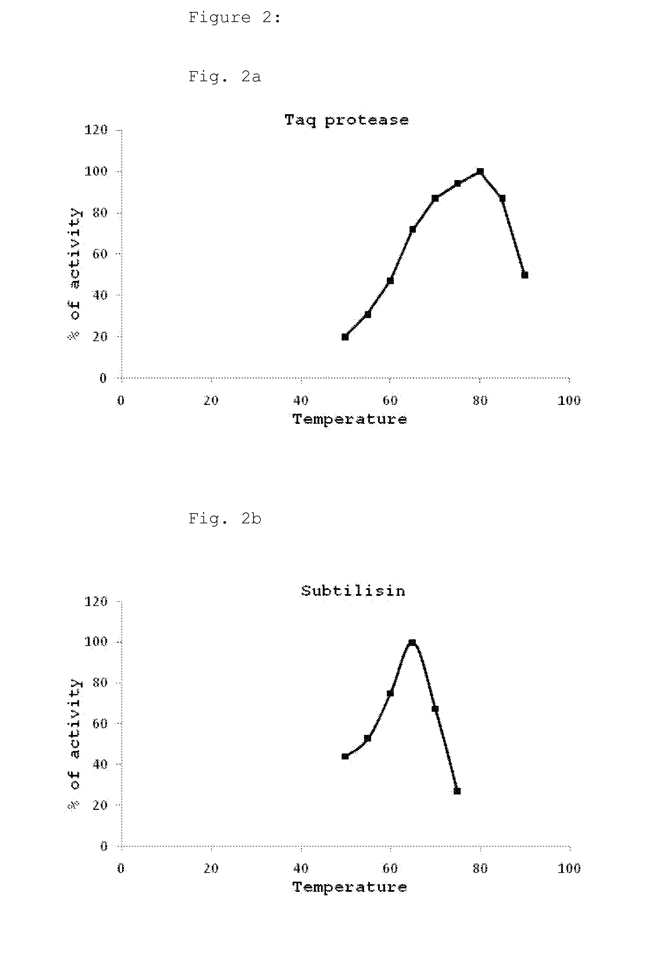

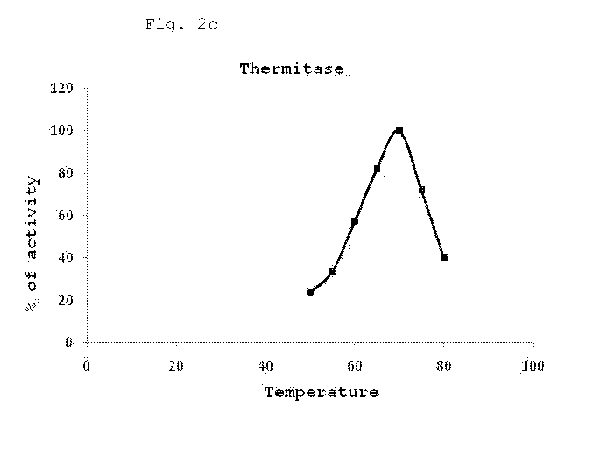

Thermostable and/or intermediate thermostable proteases have a low activity at a temperature of 25°C to 40°C and a temperature optimum of 60 - 80°C or higher (see Fig. 2). The enzyme may need or may not need to be activated during the baking process and preferably loose their activity at the end of the baking process.

The thermostable and/or intermediate thermostable proteases can be produced by microorganisms either prokaryotes (bacteria, archaea) and eukaryotes (fungi) or extracted from plants.

The proteases according to the invention are such that at a pH where the enzyme is stable they have a temperature optimum that is higher than 60°C, preferably higher than 70°C and even more preferably higher than 80°C.

The ratio between their activity at optimum temperature and at 25°C is at least higher than 10.

They show an absence of adverse effect on dough rheology (such as weakening of the dough structure), on the crumb structure (such as appearance of an open crumb structure) and on the volume (such as a decrease in volume) of the resulting bread.

The choice of the protease is very important. The protease should not exert any adverse effect such as weakening of the dough during dough ingredients mixing and the subsequent proofing of the dough. Indeed in this case the permitted dosage of unsuitable proteases would be too low to have a pronounced effect on the mouthfeel.

The protease(s) may be added in a composition containing other enzymes like amylase and/or xylanase and/or lipase and/or glucose oxidase and/or lipoxygenase and/or peroxidase and/or carbohydrate oxidase.

The dough-improving and/or bread improving composition may contain a combination of conventionally used baking additives like :
gluten and/or
oxidants like vitamin C or azodicarbonamide and/or
emulsifiers like mono- or di-glycerides, diacetyl tartrate esters of monoglycerides, sodium stearoyl lactylates, sugar esters of fatty acids, lecithin and/or
sugar and/or
salt and/or
fat and/or
oil.

These mixtures of active ingredients including the protease according to the invention and/or other enzymes than the protease according to the invention and/or baking additives can be diluted by appropriate carriers normally used in bakery applications like wheat flour, rye flour, starch, water or oil, to obtain a dosage level appropriate for mixing in doughs for baking properties.

The mixtures can be in powder, granulated, agglomerated or liquid form.

### Examples

### Example 1 : Overview of used thermostable or intermediate proteases and their origin

The proteases may be obtained from a producing species (eukaryotic or prokaryotic) by the use of any suitable technique. For instance, the protease preparation may be obtained by fermentation of a micro-organism and subsequent isolation of the protease containing preparation from the resulting broth by methods known in the art such as centrifugation, ultrafiltration or chromatography. The proteases may also be obtained by cloning the DNA sequence coding for a suitable protease in a host organism, expressing the protease intra- or extracellularly and collecting the produced enzyme.

The proteases may also be obtained by directed evolution or gene shuffling of thermostable or non-thermostable proteases or enzymes genes and subsequent expression as mentioned above. As long as they have an activity of cleaving peptide bond(s), they are considered to be proteases in the scope of this invention. Below are mentioned non-limiting examples of proteases according to the invention, and their preferred origin.

| Protease | Species | Origin | Topt |
|---|---|---|---|
| Taq protease | *Thermus aquaticus* | Fermentation as described above | 80°C |
| Thermitase | *Thermoactinomyces vulgaris* | Fermentation as described in EP1496748 | 70°C |
| Thermolysin | *Bacillus thermoproteolyticus* | Sigma-Aldrich | 70°C |
| Subtilisin | *Bacillus licheniformis* | Sigma-Aldrich | 65°C |
| Papain | Papaya | Sigma-Aldrich | 70°C |

### Example 2 : Effect of Taq protease, Thermitase, Thermolysin, Papain and Subtilisin on Proof Time, Loaf Moisture and Specific Loaf Volume

Addition of either enzyme to the dough at the dosage specified in the following examples does not change the proof time, loaf moisture and specific loaf volume. The initial moisture content varies slightly, but all the buns lost approximately the same amount of moisture during six days of storage at room temperature.

### Example 3 : Taq protease isolation

One of the preferred proteases used is obtained by culturing the strain *Thermus aquaticus* LMG 8924 on the following medium (in distilled water): 1 g/l tryptone; 1 g/l yeast extract and 100 ml/l salt solution. The pH is adjusted to 8.2 with 1 M NaOH prior to sterilization at 121°C for 15 minutes. The salt solution has the following composition (in distilled water): 1 g/l nitriloacetic acid; 0.6 g/l CaSO₄.2H₂O; 1 g/l MgSO₄.7H₂O; 80 mg/l NaCl, 1.03 g/l KNO₃; 6.89 g/l NaNO₃; 2.8 g/l Na₂HPO₄.12H₂O; 10 ml/l FeCl₃.6H₂O solution (47 mg/100 ml dH₂O); 10 ml/l trace element solution. The Trace element solution has the following composition (in distilled water): 0.5 ml/l H₂SO₄; 1.7 g/l MnSO₄.H₂O; 0.5 g/l ZnSO₄.7H₂O; 0.5 g/l H₃BO₃; 25 mg/l CuSO₄.5H₂O; 25 mg/l Na₂MoO₄.2H₂O; 46 mg/l CoCl₂.6H₂O. Incubation is done at 60°C with aeration (pO₂ 60%, 4 vvm) during 24 hours after which the medium is collected for further concentration.

*Thermus aquaticus* LMG 8924 produced at least two extracellular proteases. One of the extracellular proteases is aqualysin I, and is an alkaline protease which is secreted linearly from the early stationary phase until cells cease to grow. The optimum temperature of the proteolytic activity is between 70 and 80°C. Another extracellular protease is aqualysin II and is a neutral protease, the production of which appears from day 4 and its concentration increasing linearly for 5 days. At that stage the maximum activity is obtained at 95°C (the highest temperature tested).

To prepare samples of aqualysin I (according to the present invention, referred to as "Taq protease") for baking tests the fermentation extract is used after 1 day of fermentation, i.e. when no or few aqualysin II is produced. The supernatant of the fermentation is then concentrated by membrane ultrafiltration (molecular cut off 10000 Da). Taq protease is essentially Aqualysin I and may comprise low amounts of Aqualysin II. The crude Taq protease solution is stored frozen until used in baking tests.

The Taq protease solution displays maximum activity at a temperature of 80°C. There is almost no loss of enzyme activity while heating the solution for one hour at 80°C. Heating the enzyme at 90°C during 10 min reduces the activity by 60%.

The protease activity is measured on azurine-crosslinked casein (AZCL-casein). It is prepared by dyeing and crosslinking casein to produce a material which hydrates in water but is water-insoluble. Hydrolysis by proteases produces water soluble dyed fragments, and the rate of release of these (increase in absorbance at 590 nm) can be related directly to enzyme activity (Protazyme AK Tablets, Megazyme, Ireland). A protazyme AK tablet is incubated in 100 mM Na₂HPO₄.2H₂O; pH 7.0 at 60°C for 5 min. An aliquot of enzyme (1.0 ml) is added and the reaction is allowed to continue for exactly 10 min. The reaction is terminated by the addition of tri-sodium phosphate (10 ml, 2% w/v, pH 12.3). The tube is allowed to stand for approx. 2 min at room temperature and its content is filtered. The absorbance of the filtrate is measured at 590 nm against a substrate blank.
The activity is expressed as:
mU/ml = (34.2 * (Abs₅₉₀ enzyme - Abs₅₉₀ blank) + 0.6) / dilution

The enzymatic activity can also be measured with other assays for protease activity known by persons skilled in the art. Among these is the colorimetric method using casein as substrate followed by the detection of the released amino acids with the Folin & Ciocalteu's Phenol reagent.

### Example 4 : tests on soft buns

The standard baking test for soft buns is performed as follows. The basic recipe is (in grams):

| Wheat Flour (Duo) | 2000 |
|---|---|
| Water | 940 |
| Fresh Yeast (Bruggeman, Belgium) | 160 |
| Sodium Chloride | 34 |
| Partially hydrogenated palm oil | 65 |
| Sugar (sucrose) | 160 |
| Ascorbic acid | 0.08 |

The ingredients are mixed for 2 min at low and 7 min at high speed in a spiral mixer type Diosna (SP24). The final dough temperature is 27°C. 1200 g dough is rounded and proofed during 20 min at bakery temperature (25°C) and humidity (50-55%). 40 g dough pieces are made up using the Rotamat moulder. These dough pieces are proofed at 35°C for 60 min at 95% relative humidity in a Koma proofbox. The buns are then baked at 215°C during 9 min in a WP oven without steam. It is obvious to one skilled in the art that same end results can be obtained by using equipment of other suppliers.

The trained panel marks the products according to a reference on a 0 to 5 points line scale with 0 being the low end (though) and 5 the high end (short). Evaluations by panellists which are significantly different from the ones of the other panellists are removed.

In addition, a TA-XT2^{™} texture analyzer equipped with a pizza tensile rig used at a speed of 20 mm/sec allows the measurement of the following parameters: the force (maximum force needed to break the bun expressed in grams (g)) and the total work (total work needed to break the bun expressed in g.sec and represented by the surface below the curve on the chart generated by the apparatus, see fig 1). As factors such as batch of flour, ambient temperature and humidity, and time between baking and test may affect said parameters, measures are compared to a reference using the same ingredients, and baked and tested in parallel. Similar comparisons to the references have been obtained using several batches of flour, at different temperature and humidity, and at one to several days after baking, thus the following mentioned features are not limiting the invention.

To be effective on the mouthfeel and especially on the short bite, the additives should at least lower the maximum force with 10 % and the total work with 10 %. Such difference is repeatedly perceived by a sensorial panel.

### Example 5 : validation of short bite measurements according to taste panel and relation with texture parameters: effects of monoglycerides on the short bite in soft buns (according to the state of the art)

Buns have been baked according to the aforementioned method with the addition of unsaturated monoglycerides (Multex Mono 9202 mpw produced by Beldem; Belgium). Force and total work have been measured 1 day after baking with the texture analyzer and short bite has been estimated by a sensory panel as described in example 4. Results are presented in table 1.

**Table 1 :**

| | Force Max G | Total Work g.sec | Short bite |
|---|---|---|---|
| Reference | 565 | 921 | 0 |
| 500 g* monoglycerides | 491 | 726 | 4 |

| | | | |
|---|---|---|---|
| * per 100 kg flour. | | | |

By comparison to the Reference, the addition of monoglycerides improves short bite as estimated by a trained panel, and reduces the force and the total work by more than 10%.

There is a relation (inverse) between the maximum force and the total work with the sensorial perception of short bite.

### Example 6 : Dose effect of Taq protease on short bite in soft buns and relation with texture parameters

Buns have been baked according to the aforementioned method with addition of different concentrations of Taq protease (0 U = Reference).

The effect of proteases added to bakery products on short bite can be measured by a sensory evaluation panel, preferably trained using soft buns baked according to Example 5, and a texture analyzer.

Short bite has been estimated by a sensory panel and force and total work have been measured 1 day after baking with the texture analyzer as described in example 4. Results are presented in table 2.

**Table 2.**

| | Force Max g | Total Work g.sec | Short bite |
|---|---|---|---|
| Reference (0 U)* | 514 | 924 | 0 |
| 230 U* Taq protease | 462 | 831 | 2 |
| 690 U* Taq protease | 445 | 773 | 4 |
| 1150 U* Taq protease | 462 | 790 | 4 |

| | | | |
|---|---|---|---|
| * expressed as units added to 100 kg flour. | | | |

It has now been surprisingly found that by comparison to the Reference bun at all doses tested, Taq protease addition results into an improved short bite, as good as the results obtained with the monoglycerides used according to the state of the art, and a reduction of the force and of the total work by at least 10%.

### Example 7 : Effect of Taq protease and Thermitase on short bite in soft buns and relation with texture parameters

Buns have been baked according to the aforementioned method with addition of different concentrations of thermitase or Taq protease. Short bite has been estimated by a sensory panel and force and total work have been measured 1 day after baking with the texture analyzer as described in example 4. Results are presented in table 3.

**Table 3.**

| | Force g | Total Work g.sec | Short bite |
|---|---|---|---|
| Reference (0 U*) | 549 | 825 | 0 |
| 800 U* Taq protease | 452 | 693 | 4 |
| 1600 U* Taq protease | 421 | 696 | 4 |
| 5000 U* Thermitase | 429 | 634 | 5 |
| 7500 U* Thermitase | 405 | 623 | 5 |

| | | | |
|---|---|---|---|
| * expressed as units added to 100 kg flour. | | | |

By comparison to the Reference bun, at all doses tested Taq protease and thermitase result into an improved short bite and a reduction of the force and of the total work by at least 10%.

### Example 8 : Effect of Taq protease, Thermolysin and Subtilisin on short bite in soft buns and relation with texture parameters

Buns have been baked according to the aforementioned method with addition of different concentrations of Taq protease, thermolysin and subtilisin. Short bite has been estimated by a sensory panel and force and total work have been measured 1 day after baking with the texture analyzer as described in example 4. Results are presented in table 4.

**Table 4.**

| | Force Max g | Total Work g.sec | Short bite |
|---|---|---|---|
| Reference (0 U*) | 762 | 1102 | 0 |
| 345 U* Taq protease | 594 | 765 | 4 |
| 690 U* Taq protease | 525 | 713 | 4 |
| 0.35 U* Thermolysin | 595 | 969 | 2 |
| 0.7 U* Thermolysin | 592 | 920 | 2 |
| 0.35 U* Subtilisin | 558 | 898 | 2 |
| 0.7 U* Subtilisin | 553 | 973 | 2 |

| | | | |
|---|---|---|---|
| * expressed as units added to 100 kg flour. | | | |

By comparison to the Reference buns, at all doses tested Taq protease, thermolysin and subtilisin result into an improved short bite and a reduction of the force and of the total work by at least 10%.

### Comparative Example 1 : Effect of Taq protease and maltogenic amylase on short bite in soft buns and relation with texture parameters

Buns have been baked according to the aforementioned method with addition of different concentrations of Taq protease and Novamyl® (Novozymes), a maltogenic alpha-amylase well known for its effect on softness in bread. Short bite has been estimated by a sensory panel and force and total work have been measured 1 day after baking with the texture analyzer as described in example 4. Results are presented in table 5.

**Table 5.**

| | Force Max g | Total Work g.sec | Short bite |
|---|---|---|---|
| Reference (0 U*) | 730 | 1058 | 0 |
| 230 U* Taq protease | 652 | 839 | 2 |
| 460 U* Taq protease | 538 | 711 | 4 |
| 2.5 g* Novamyl | 571 | 1051 | 0 |
| 5 g* Novamyl | 573 | 1067 | 0 |
| 8 g* Novamyl | 579 | 1100 | 0 |
| 10 g* Novamyl | 568 | 1052 | 0 |

| | | | |
|---|---|---|---|
| * expressed as units added to 100 kg flour. | | | |

By comparison to the Reference buns, only the addition of Taq protease results into an improved short bite and a reduction of the force and of the total work by at least 10%. Absence of effect on texture parameters and short bite of another amylase, Ban 800 (Novozymes) has been confirmed using the same methods.

### Comparative Example 2 : Effect of Taq protease and papain on short bite in soft buns and relation with texture parameters

Buns have been baked according to the aforementioned method with addition of different concentrations of Taq protease and papain. Short bite has been estimated by a sensory panel and force and total work have been measured 1 day after baking with the texture analyzer as described in example 4. Results are presented in table 6.

**Table 6.**

| | Force Max g | Total Work g.sec | Short bite |
|---|---|---|---|
| Reference (0 U*) | 549 | 825 | 0 |
| 350 U* Taq protease | 452 | 693 | 4 |
| 700 U* Taq protease | 421 | 696 | 4 |
| 0.3 g* papain | 514 | 870 | 0 |
| 0.5 g* papain | 502 | 919 | 0 |

| | | | |
|---|---|---|---|
| * expressed as units added to 100 kg flour. | | | |

By comparison to the Reference buns, only Taq protease, results into an improved short bite and a reduction of the force and of the total work by at least 10%.

### Example 9 : Effect of Taq protease on short bite in microwavable buns and relation with texture parameters

Microwavable buns have been baked according to the aforementioned method with addition of Taq protease. Short bite has been estimated by a sensory panel and force and total work have been measured 4 days after baking with the texture analyzer as described in example 4. Results are presented in table 7.

**Table 7.**

| | Force Max g | Total Work g.sec | Short bite |
|---|---|---|---|
| Reference (0 U*) | 275 | 1246 | 0 |
| 780 U* Taq protease | 196 | 1054 | 4 |

| | | | |
|---|---|---|---|
| * expressed as units required for 100 kg flour. | | | |

Taq protease has an effect on short bite and reduces the force and the total work by 28.7% and 15.4% respectively.

### Example 10 : Effect of Taq protease on short bite in soft buns wi th different types of flour and relation with texture parameters

Buns have been baked according to the aforementioned method with different types of flour and with the addition of Taq protease. Short bite has been estimated by a sensory panel and force and total work have been measured 1 day after baking with the texture analyzer as described in example 4. Results are presented in table 8.

**Table 8.**

| | Force Max G | Total Work g.sec | Short bite |
|---|---|---|---|
| High gluten flour (HGF) | 638 | 1256 | 0 |
| HGF + 460 U* Taq protease | 465 | 953 | 4 |
| Medium gluten flour (MGF) | 671 | 893 | 1 |
| MGF + 460 U* Taq protease | 487 | 688 | 4 |
| Low gluten flour (LGF) | 580 | 993 | 1 |
| LGF + 460 U* Taq protease | 489 | 783 | 4 |

| | | | |
|---|---|---|---|
| * expressed as units required for 100 kg flour. | | | |

By comparison to the Reference buns in all flour tested, the addition of Taq protease improves short bite and reduces the force and the total work by more than 10%.

### Example 11 : Effect of Taq protease on short bite in crusty products

The standard baking tests for baguettes (standard for crusty products) is performed as follow. The basic recipe is (in grams):

| | |
|---|---|
| Flour (Surbi) | 2000 |
| Water | 1400 |
| Fresh Yeast (Bruggeman, Belgium) | 150 |
| Sodium Chloride | 50 |
| S-500 Controller | 75 |

The ingredients are mixed for 2 min at low and 10 min at high speed in a spiral mixer type Diosna (SP24). The final dough temperature is 26°C. After a bulk fermentation for 45 min at 25°C, 250 g dough pieces are made up using a moulder type Alliance (for 50 cm dough pieces). The dough pieces are proofed at 30°C and 95% relative humidity for 150 min. Then the breads are baked in a rotary oven for 25 min at 230/200°C with 7 sec steam at the oven loading and steam key open after 10 min. It is obvious to one skilled in the art that same end results can be obtained by using equipment of other suppliers.

The effects of the proteases on crusty products are evaluated by a sensorial taste panel and by using TA-XT2^{™} texture analyzer, as described above for buns.

Baguettes have been baked according to the aforementioned method for crusty products with addition of different concentrations of Taq protease.
Baguettes have been analysed by a sensory panel and force and total work have been measured 2 hours after baking with the texture analyzer as described in Example 4. Results are presented in table 10.

**Table 10 :**

| | Force Max G | Total Work g.sec | Short bite |
|---|---|---|---|
| Reference | 4885 | 3297 | 0 |
| 1300 U* Taq protease | 4243 | 2271 | 4 |
| 2600 U* Taq protease | 4292 | 2136 | 4 |
| 3900 U* Taq protease | 3942 | 2167 | 4 |

| | | | |
|---|---|---|---|
| * expressed as units added to 100 kg flour. By comparison to the Reference, the addition of Taq protease improves short bite and reduces the force and the total work by more than 10%. | | | |

The invention is not limited by the examples above and, in the light of the description, the skilled person will be able to use other proteases than in the examples of the present text and to apply them to obtain the features of the method of the invention.

Bakery products were analysed for their texture parameters as defined above, using preferably a TA-XT2 ^{™} texture analyzer, but the person skilled in the art may easily find and/or adapt other devices suitable for the invention without being outside the scope of the present invention.

## Claims

1. Method for the improvement of the short bite of bakery products, which comprises the step of adding at least one intermediate thermostable or thermostable serine or metallo-protease in said bakery product.

2. Method according to claim 1, wherein texture parameters consisting in the force (g) and the total work (g.sec) needed to break an identical sample of bakery product are measured.

3. Method according to claim 2 wherein texture parameters are measured simultaneously by a texture analyser device, used to break said bakery product.

4. Method according to claims 1 to 3 wherein the force (g) and the total work (g.sec) are both improved by at least 10% vis-à-vis an identical sample but not containing at least one intermediate thermostable or thermostable serine or metallo-protease.

5. Method according to any of the preceding claims wherein the short bite per sample of bakery product is estimated by taste panel of people.

6. Method according to claims 1 to 5, wherein the thermostable and/or intermediate thermostable protease has a temperature activity optimum higher than 60°C, preferably higher than 70°C, preferably higher than 80°C.

7. Method according to claims 1 to 6, wherein the ratio between the protease activity at optimum temperature and the protease activity at 25°C is higher than 10.

8. Method according to any one of claims 1 to 7, wherein the proteases show no adverse effect on dough rheology, on the crumb structure and on the volume of the resulting bakery product.

9. Method to any one of the preceding claims, wherein the protease is obtained by extraction from naturally-occurring eukaryotic or prokaryotic organisms, by synthesis or by genetic engineering.

10. Method to any one of the preceding claims, wherein the protease is a neutral and/or preferably an alkaline protease.

11. Method to any one of the preceding claims, wherein the protease is a Taq protease, preferably isolated from *Thermus aquaticus LMG8924*, preferably being essentially aqualysin I, thermitase, isolated from *Thermoactinomyces vulgaris,* thermolysin, isolated from *Bacillus thermoproteolyticus* or subtilisin, isolated from *Bacillus licheniformis*.

12. Method according to claim 1 to 11, wherein bakery products are soft bakery products such as bread, soft rolls, donuts, buns, microwavable buns, Danish pastry, hamburger rolls, pizza and pita bread and cake.

13. Method according to any one of the preceding claims wherein said protease are added to the flour at 5000 to 7500 units / 100 kg of flour of thermitase, at 0.35 to 0.7 units / 100 kg of flour of thermolysin, at 0.35 to 0.7 units / 100 kg of flour of subtilisin, or at 230 to 10400 units / 100 kg of flour of Taq protease, more preferably at 350 to 700 units / 100 kg of flour of Taq protease.

14. Method according to claims 1 to 12 wherein the bakery products are crusty products such as baguettes and rolls.

15. Method according to claim 14 wherein Taq protease is added to the flour at 1300 to 10400 units /100 kg of flour.

16. Improver for the short bite of soft bakery products containing 230 to 1600 units / 100 kg of flour of Taq protease, more preferably at 350 to 700 units / 100 kg of flour of Taq protease, preferably isolated from *Thermus aquaticus LMG8924* or 5000 to 7500 units / 100 kg flour of Thermitase, isolated from *Thermoactinomyces vulgaris* or 0.35 to 0.7 units /100 kg of flour of Thermolysin, isolated from *Bacillus thermoproteolyticus* or 0.35 to 0.7 units / 100 kg of flour of Subtilisin, isolated from *Bacillus licheniformis*.

17. Improver for the short bite for crusty products containing 1300 to 10400 units / 100 kg of flour of Taq protease.
